# EUROPEAN PATENT SPECIFICATION

(11) **EP 4 682 843 B1**
(45) Date of publication and mention of the grant of the patent: **09.12.2026**
(21) Application number: 24189831.1
(22) Date of filing: 19.07.2024
(51) Int. Cl.: G06V 10/82, G06V 30/19

(54) **A METHOD FOR PROVIDING A GRIPPING POINT FOR MECHANICAL INTERACTION ON AN OBJECT**
VERFAHREN ZUR BEREITSTELLUNG EINES GREIFPUNKTS ZUR MECHANISCHEN INTERAKTION AN EINEM OBJEKT
PROCÉDÉ DE FOURNITURE D'UN POINT DE PRÉHENSION POUR UNE INTERACTION MÉCANIQUE SUR UN OBJET

(43) Date of publication of application: 21.01.2026
(73) Proprietor: Robert Bosch GmbH, 70442 Stuttgart (DE)
(72) Inventor: Sallai, Martin, 6000 Kecskemét (HU); Remenyi, Istvan, 2890 Tata (HU); Hajder, Levente, 1224 Budapest (HU); Czako, Patrik Roland, 5126 Jászfényszaru (HU); Peto, Mark, 1027 Budapest (HU)

(56) References cited:
- CN-A- 116 494 253
- CN-A- 117 036 473
- KR-A- 20130 032 990
- YUN JUNTONG ET AL: "Grasping Pose Detection for Loose Stacked Object Based on Convolutional Neural Network With Multiple Self-Powered Sensors Information", IEEE SENSORS JOURNAL, IEEE, USA, vol. 23, no. 18, 29 July 2022 (2022-07-29), pages 20619 - 20632, XP011949141, ISSN: 1530-437X, [retrieved on 20220801], DOI: 10.1109/JSEN.2022.3190560
- WANG DEXIN ET AL: "High-Performance Pixel-Level Grasp Detection Based on Adaptive Grasping and Grasp-Aware Network", IEEE TRANSACTIONS ON INDUSTRIAL ELECTRONICS, IEEE SERVICE CENTER, PISCATAWAY, NJ, USA, vol. 69, no. 11, 25 October 2021 (2021-10-25), pages 11611 - 11621, XP011910420, ISSN: 0278-0046, [retrieved on 20211026], DOI: 10.1109/TIE.2021.3120474

## Description

The invention relates to a method for providing a gripping point for mechanical interaction on an object. Furthermore, the invention relates to a computer program, an apparatus, and a storage medium for this purpose.

### State of the art

Finding gripping points on surfaces of objects with an arbitrary shape is a challenging task for manipulating objects, even if they stand still. The variety of object appearance and the coordination of visual recognition and a machine controller, which is capable of gripping the object is also challenging as for example in the case of an Automated Unpacking Machine.

Arbitrary object recognition - especially flexible shapes, surfaces and colors from surfaces of cardboard box contents during unpacking often cause too much unpredictable scenarios in terms of designing and building a highly reliable unpacking machine. Moreover, grabbing or manipulating arbitrary objects from the boxes or on a conveyor needs to localize critical points on the objects to interact with them using robotic or mechanical controller functions, where safety and robustness is a priority.

KR 2013 0032990 A discloses a method for generating a nip point by range recognition and a computer-readable recording medium including a program for the method are provided to recognize and grip objects in various shapes in the same range by generating a nip point by recognizing the objects in the same range.

### Disclosure of the invention

The invention is defined in the appended claims. Further features and details of the invention are disclosed in the respective dependent claims, the description and the drawings. Features and details described in the context to the inventive method also correspond to the inventive computer program, the inventive data processing apparatus as well as the inventive computer-readable storage medium, and vice versa in each case.

According to an aspect of the invention a method for providing a gripping point for mechanical interaction on an object is provided, the method comprising the following steps, wherein the steps may be performed repeatedly and/or in a specific order. The gripping point may be a point, where a robotic arm may grip the object to move it. The object may be an object with an irregular or arbitrary shape like for example a crumpled paper packaging on a cardboard box.

In a first possible step, at least one image of the object is provided, the image being a result of an acquisition by at least one sensor. The sensor may be a camera sensor.

In a next possible step, object prompts are provided based on the provided image by utilising an object detector and/or an unsupervised or semi-supervised segmentation method. The unsupervised or semi-supervised segmentation method that is used may be parametrized to leave object borderline edges as large as possible, because object prompts may function as a region-of-interest window for a Segment Anything Model (SAM), which may pre-determine its pixel search space for segmentation mask(s).

Examples for the object detector may be a Convolutional neural network, YOLO (You Only Look Once) or Single Shot MultiBox Detector (SSD). Unsupervised segmentation methods may include k-means clustering, which is a method that groups similar data points into clusters based on their distance from each other, and mean shift, which is a method that identifies clusters by shifting a window over the data and finding the mode of the data points within the window. Semi-supervised segmentation methods may include graph-based segmentation, which is a method that uses a graph to represent the image and assigns labels to the nodes based on a small set of labelled pixels, and active contour models, which is a method that uses a curve or surface to delineate the object of interest and is guided by a combination of image-based and user-defined constraints.

In a next possible step, a segmentation is performed on the provided images using the provided object prompts to generate an object mask representing the object. The segmentation may be a zero shot segmentation, particularly a zero-shot learning semantic segmentation. The segmentation may be performed by means of a Segment Anything Model.

In a next possible step, a morphological skeletonization is performed in the provided image based on the generated object mask to obtain a polyline. Morphological skeletonization in an image is particularly a process of reducing an image to its essential structure, which may represent geometric and topological properties of the original image. It may involve a removal of pixels from the image while preserving the connectivity of the remaining pixels, resulting in a simplified image that retains the important features of the original image.

In a next possible step, the polyline is reduced to a defined number of points. In this step, unnecessary points may be removed from the polyline to obtain a simplified representation of the object's surface topology. Further, the complexity of the polyline may be reduced by removing redundant or noisy points, while preserving its essential features. Then, relevant features may be identified and extracted from the polyline, such as endpoints, a length, or curvature, to then be able to determine the optimal gripping point. It is possible that reducing the polyline to the defined number of points is performed by using the Ramer-Douglas-Peucker algorithm. This may enable a more efficient point reduction process, as the Ramer-Douglas-Peucker algorithm may effectively remove unnecessary points from the polyline while preserving its essential features. This can lead to a more robust and reliable gripping point selection process, ultimately facilitating precise mechanical interaction with the object.

In a next possible step, at least one of the points is selected to provide the gripping point for mechanical interaction on the object. The point that is selected may be a point that is closest to a centroid of the object in the image.

In a further possible step, a gripping of the object on the provided gripping point by a robotic arm may be initiated to move the object.

The method according to the invention, i.e. the computer vision pipeline, may enable an efficient determination of gripping points on surfaces, particularly surfaces with an irregular structure, for mechanical interaction by leveraging zero-shot learning semantic segmentation masks, which may be used to propose gripping points without requiring extensive training data. The ability of the method according to the invention to utilise object prompts and transformer-based encoding may allow for effective image understanding and object localization, ultimately facilitating the generation of the polyline and the subsequent gripping point selection. The method according to the invention may advantageously allow for the generation of object prompts and image and prompt encoding without requiring labelled training data, thereby enabling a more efficient and effective method for determining gripping points on surfaces.

It is possible that providing the object prompts comprises the following steps:
- Providing bounding boxes of the object as object proposals,
- Inferring bounding box predictions by means of the object detector based on the bounding boxes,
- Providing the object prompts based on the inferred bounding box predictions. Providing the object prompts may thus comprise an additional step, where bounding boxes of the object are generated as object proposals. These bounding boxes may in other words be used to infer bounding box predictions by means of the object detector, and subsequently, the object prompts may be provided based on these inferred bounding box predictions. This may enable the method according to the invention to generate representative object prompts.

It is also possible that providing the object prompts comprises the following steps:
- Providing segmentation patches as object proposals,
- Using the unsupervised segmentation method based on the segmentation patches to provide the object prompts.

The segmentation patches may refer to small, localized regions within the image that have been identified and isolated. These patches may be used to improve an accuracy by focusing on specific areas of interest within the image. This alternative may enable the method according to the invention to generate meaningful object prompts without requiring any prior knowledge about the object's category or class.

It is possible that performing the segmentation comprises the following steps:
- Encoding the image by means of a vision transformer neural network architecture,
- Encoding the object prompts into a latent space,
- Querying the encoded image with the encoded object prompts,
- Decoding a mask for each object on the image.

The segmentation step may thus involve encoding the image using the vision transformer neural network architecture to generate a representation of the image. The vision transformer neural network architecture may be a deep learning model that is designed to process visual data, such as images and videos. It is particularly based on the transformer architecture, which was originally developed for natural language processing tasks. The vision transformer may comprise a series of self-attention layers, which may allow the vision transformer to selectively focus on different parts of the input data. This may allow the vision transformer to better understand relationships between different visual features and to make more accurate predictions. This encoded image may then be used in conjunction with the encoded object prompts, which are transformed into the latent space. The encoded image and prompts may be queried together to retrieve a mask for each object on the image, thus enabling the generation of an accurate semantic segmentation mask for proposing gripping points for mechanical interaction. For each object, multiple valid masks may be generated and ordered by a confidence score, and the most confident may be selected as output for that object.

Performing the morphological skeletonization comprises the following steps:
- Constructing the polyline based on the generated object mask,
- Removing intersection lines and/or polyline hoops and/or circles from the polyline,
- Identifying endpoints and a length of the object to obtain a location near a centroid of the object as the gripping point for mechanical interaction.

In other words, it is possible that the morphological skeletonization step in the pipeline according to the invention involves constructing the polyline based on the generated object mask, followed by removing intersection lines and/or polyline hoops and/or circles from the polyline to create a simplified representation of the object's shape. This simplification may aim to identify endpoints and the length of the object to obtain a location near the centroid of the object as the gripping point for mechanical interaction. The intersection lines and/or polyline hoops and/or circles of the polyline may be identified e.g. with the Bentley-Ottoman algorithm.

In another aspect of the invention, a computer program may be provided, in particular a computer program product, comprising instructions which, when the computer program is executed by a computer, cause the computer to carry out the method according to the invention. Thus, the computer program according to the invention can have the same advantages as have been described in detail with reference to a method according to the invention.

In another aspect of the invention, an apparatus for data processing may be provided, which is configured to execute the method according to the invention. As the apparatus, for example, a computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by a computer, cause the computer to carry out the steps of the method according to the invention. The storage medium may be formed as a data storage device such as a hard disk and/or a non-volatile memory and/or a memory card and/or a solid state drive. The storage medium may, for example, be integrated into the computer.

Furthermore, the method according to the invention may be implemented as a computer-implemented method. Alternatively or additionally, at least one of the disclosed method steps may be computer-implemented and/or automated.

Further advantages, features and details of the invention will be apparent from the following description, in which embodiments of the invention are described in detail with reference to the drawings. In this context, the features mentioned in the claims and in the description may each be essential to the invention individually or in any combination. Showing:
- Fig. 1:: A method, an object, a sensor, a computer program, a storage medium and apparatus according to embodiments of the invention,
- Fig. 2:: A method according to embodiments of the invention.

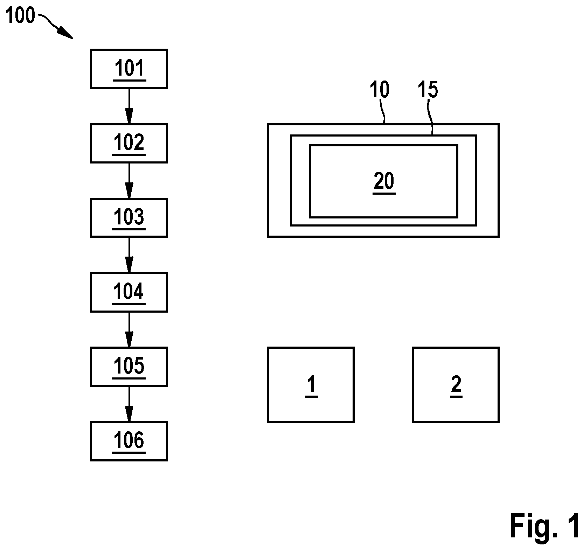

Fig. 1 shows a method 100, an object 1, a sensor 2, a computer program 20, a storage medium 15 and apparatus 10 according to embodiments of the invention.

Fig. 1 particularly shows an embodiment of a method 100 for providing a gripping point for mechanical interaction on an object 1. In a first step 101, at least one image of the object 1 is provided, the image being a result of an acquisition by at least one sensor 2. In a second step 102, object prompts are provided based on the provided image by utilising an object detector and/or an unsupervised or semi-supervised segmentation method. In a third step 103, a segmentation is performed on the provided images using the provided object prompts to generate an object mask representing the object 1. In a fourth step 104, a morphological skeletonization is performed in the provided image based on the generated object mask to obtain a polyline. In a fifth step 105, the polyline is reduced to a defined number of points. In a sixth step 106, at least one of the points is selected to provide the gripping point for mechanical interaction on the object 1.

The invention according to embodiments provides a computer vision pipeline using zero-shot learning semantic segmentation masks to detect points on surfaces, which may be used as proposals for gripping points for a mechanical interaction at inference time of the machine learning model.

The computer vision pipeline according to embodiments of the invention may comprise generating object prompts, which may be derived from bounding box-based or segmentation mask-based object proposals. Afterwards, a transformer-based image and prompt encoding, a segmentation mask decoder, a morphological skeletonization and post-processing operations on skeletonized polyline points on surfaces may be applied to obtain gripping points for mechanical interaction.

By knowing a priori, that n classes of objects may occur on images and k types of contents may occur on images for object content recognition, one may segment objects in the image by means of an unsupervised segmentation method. According to embodiments of the invention, the latter capability is extended to use unsupervised segmentation for object prompt encoding in addition to the bounding box prompt encoding.

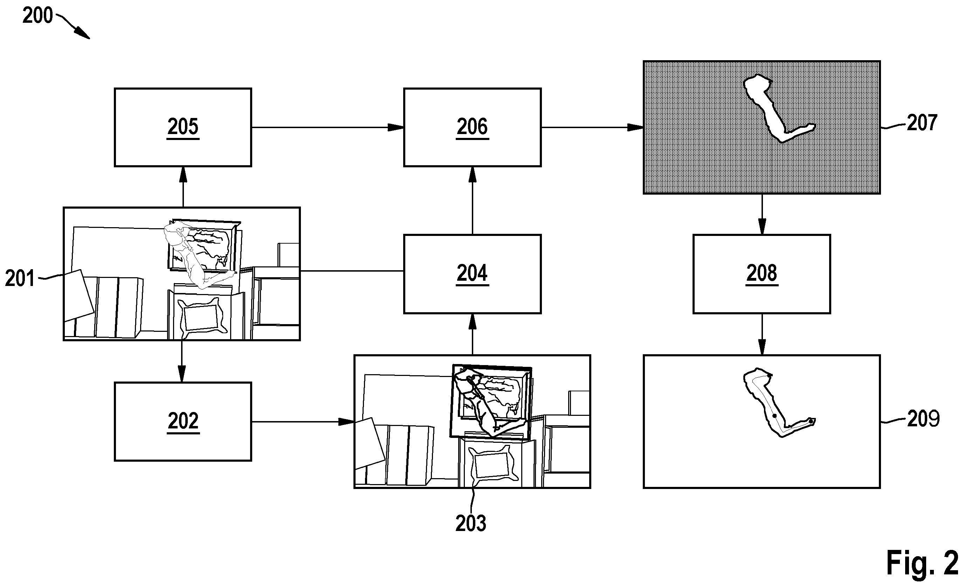

In the following, an embodiment of a method 200, i.e. the computer vision pipeline steps according to the invention, is described with reference to Fig. 2.

In a first step 201, an image is provided. Then, object prompts may be provided according to step 202, particularly generated. In a first alternative in this regard, bounding boxes may be used as object proposals. Then, bounding box predictions may be inferred on an image from a pre-trained object detector, e.g. Yolov5, and all object predictions may be collected. These predictions may put out a respective bounding box as shown in step 203. The respective bounding box may further be described with a class name and a confidence. The prediction may be used as object prompts later on. In a second alternative in this regard (not shown in Fig. 2), unsupervised segmentation patches may be used as object proposals. If on an image, *k* classes are distinguished from each other, and it is known that no other classes can occur on the images (particularly if it is not an open world use case), then unsupervised or semi-supervised segmentation methods may be used to generate object prompts. The unsupervised or semi-supervised segmentation method that is used may be parametrized to leave object borderline edges as large as possible, because object prompts may function as a region-of-interest window for a Segment Anything Model (SAM), which may pre-determine its pixel search space for segmentation mask(s).

In step 205, a Zero shot semantic segmentation may be performed as a task of a Segment Anything Model (SAM). Here, the original whole image (or zoomed in image if necessary) may be inferred and encoded by a vision transformer neural network architecture. Then, the saved object prompts (particularly all object prompts of the image) may be encoded into a latent space according to step 204. Afterwards, the encoded image may be queried with the object prompts. Then, the mask may be decoded for each object on the image according to step 206. For each object, multiple valid masks may be generated and ordered by a confidence score, and the most confident may be selected as output for that object.

In a next step 207, a morphological skeletonization of objects on the image may be performed. In a first part of this step, a thin polyline may be constructed based on the object mask. For each segmented mask representing an object, the morphological skeletonization may be performed, where an erosion and dilation with a 3x3 pixel structuring element (cross) may be utilized. In a second part of this step, intersection lines and polyline hoops / circles may be removed from the polyline skeleton topology. These can be identified e.g. with the Bentley-Ottoman algorithm.

In a next step 208, a morphological post-processing may be performed on the polylines to obtain gripping points. Here, polyline endpoints and a length may be used to obtain a location near a centroid of the object, which may then be used as a gripping point for the mechanical interaction. However, the latter approach may not always be appropriate for every shape and surface, so e.g. Ramer-Douglas-Peucker algorithm may be used to reduce the polylines to n defined points defining approximate line segments of the original skeleton polyline (number of possible gripping points plus endpoints, so n=3 or greater). The resulting polyline may comprise the reduced number of line segments. This way, the polyline may be similar to the original polyline and the topology of it may remain the same.

In a next step 209, the reduced polyline with the proposed gripping point may be provided.

The above explanation of the embodiments describes the present invention in the context of examples. Of course, individual features of the embodiments can be freely combined with each other, provided that this is technically reasonable, without leaving the scope of the present invention.

## Claims

1. A method (100) for providing a gripping point for mechanical interaction on an object (1), comprising the following steps:
- Providing (101) at least one image of the object (1), the image being a result of an acquisition by at least one sensor (2),
- Providing (102) object prompts based on the provided image by utilising an object detector and/or an unsupervised or semi-supervised segmentation method,
- Performing (103) a segmentation on the provided images using the provided object prompts to generate an object mask representing the object (1),
- Performing (104) a morphological skeletonization in the provided image based on the generated object mask to obtain a polyline, wherein performing (104) the morphological skeletonization comprises the following steps:
∘ Constructing the polyline based on the generated object mask,
∘ Removing intersection lines and/or polyline hoops and/or circles from the polyline,
∘ Identifying endpoints and a length of the object (1) to obtain a location near a centroid of the object (1) as the gripping point for mechanical interaction,
- Reducing (105) the polyline to a defined number of points,
- Selecting (106) at least one of the points to provide the gripping point for mechanical interaction on the object (1).

2. The method (100) of claim 1, **characterized in that** providing (102) the object prompts comprises the following steps:
- Providing bounding boxes of the object (1) as object proposals,
- Inferring bounding box predictions by means of the object detector based on the bounding boxes,
- Providing the object prompts based on the inferred bounding box predictions.

3. The method (100) of claim 1, **characterized in that** providing (102) the object prompts comprises the following steps:
- Providing segmentation patches as object proposals,
- Using the unsupervised segmentation method based on the segmentation patches to provide the object prompts.

4. The method (100) of any one of the preceding claims, **characterized in that** performing (103) the segmentation comprises the following steps:
- Encoding the image by means of a vision transformer neural network architecture,
- Encoding the object prompts into a latent space,
- Querying the encoded image with the encoded object prompts,
- Decoding a mask for each object (1) on the image.

5. The method (100) of any one of the preceding claims, **characterized in that** reducing (105) the polyline to the defined number of points is performed by using the Ramer-Douglas-Peucker algorithm.

6. The method (100) of any one of the preceding claims, **characterized in that** performing the segmentation (103) is a zero shot segmentation.

7. A computer program (20), comprising instructions which, when the computer program (20) is executed by a computer (10), cause the computer (10) to carry out the method (100) of any one of the preceding claims.

8. A data processing apparatus (10), comprising means for carrying out the method (100) of any one of claims 1 to 6.

9. A computer-readable storage medium (15) comprising instructions which, when executed by a computer (10), cause the computer (10) to carry out the steps of the method (100) of any one of claims 1 to 6.

## Patentansprüche

1. Verfahren (100) zum Bereitstellen eines Greifpunkts für eine mechanische Interaktion an einem Objekt (1), das die folgenden Schritte umfasst:
- Bereitstellen (101) mindestens eines Bildes des Objekts (1), wobei das Bild ein Ergebnis einer Erfassung durch mindestens einen Sensor (2) ist,
- Bereitstellen (102) von Objekt-Prompts basierend auf dem bereitgestellten Bild unter Verwendung eines Objektdetektors und/oder eines unüberwachten oder halbüberwachten Segmentierungsverfahrens,
- Durchführen (103) einer Segmentierung an den bereitgestellten Bildern unter Verwendung der bereitgestellten Objekt-Prompts zum Erzeugen einer Objektmaske, die das Objekt (1) darstellt,
- Durchführen (104) einer morphologischen Skelettierung in dem bereitgestellten Bild basierend auf der erzeugten Objektmaske, um eine Polylinie zu erhalten, wobei das Durchführen (104) der morphologischen Skelettierung die folgenden Schritte umfasst:
∘ Erstellen der Polylinie basierend auf der erzeugten Objektmaske,
∘ Entfernen von Schnittlinien und/oder Polylinienschleifen und/oder -kreisen von der Polylinie,
∘ Identifizieren von Endpunkten und einer Länge des Objekts (1), um eine Stelle nahe einem Schwerpunkt des Objekts (1) als den Greifpunkt für die mechanische Interaktion zu erhalten,
- Reduzieren (105) der Polylinie auf eine definierte Anzahl von Punkten,
- Auswählen (106) mindestens eines der Punkte, um den Greifpunkt für die mechanische Interaktion an dem Objekt (1) bereitzustellen.

2. Verfahren (100) nach Anspruch 1, **dadurch gekennzeichnet, dass** das Bereitstellen (102) der Objekt-Prompts die folgenden Schritte umfasst:
- Bereitstellen von Begrenzungsrahmen des Objekts (1) als Objektvorschläge,
- Ableiten von Begrenzungsrahmenvorhersagen mittels des Objektdetektors basierend auf den Begrenzungsrahmen,
- Bereitstellen der Objekt-Prompts basierend auf den abgeleiteten Begrenzungsrahmenvorhersagen.

3. Verfahren (100) nach Anspruch 1, **dadurch gekennzeichnet, dass** das Bereitstellen (102) der Objekt-Prompts die folgenden Schritte umfasst:
- Bereitstellen von Segmentierungspatches als Objektvorschläge,
- Verwenden des unüberwachten Segmentierungsverfahrens basierend auf den Segmentierungspatches, um die Objekt-Prompts bereitzustellen.

4. Verfahren (100) nach einem der vorhergehenden Ansprüche, **dadurch gekennzeichnet, dass** das Durchführen (103) der Segmentierung die folgenden Schritte umfasst:
- Codieren des Bildes mittels einer neuronalen Vision-Transformer-Netzwerkarchitektur,
- Codieren der Objekt-Prompts in einen latenten Raum,
- Abfragen des codierten Bildes mit den codierten Objekt-Prompts,
- Decodieren einer Maske für jedes Objekt (1) auf dem Bild.

5. Verfahren (100) nach einem der vorhergehenden Ansprüche, **dadurch gekennzeichnet, dass** das Reduzieren (105) der Polylinie auf die definierte Anzahl von Punkten unter Verwendung des Ramer-Douglas-Peucker-Algorithmus durchgeführt wird.

6. Verfahren (100) nach einem der vorhergehenden Ansprüche, **dadurch gekennzeichnet, dass** das Durchführen (103) der Segmentierung eine Zero-Shot-Segmentierung ist.

7. Computerprogramm (20), das Anweisungen umfasst, die, wenn das Computerprogramm (20) durch einen Computer (10) ausgeführt wird, bewirken, dass der Computer (10) das Verfahren (100) nach einem der vorhergehenden Ansprüche ausführt.

8. Datenverarbeitungseinrichtung (10), die Mittel zum Ausführen des Verfahrens (100) nach einem der Ansprüche 1 bis 6 umfasst.

9. Computerlesbares Speichermedium (15), das Anweisungen umfasst, die, wenn sie durch einen Computer (10) ausgeführt werden, bewirken, dass der Computer (10) die Schritte des Verfahrens (100) nach einem der Ansprüche 1 bis 6 ausführt.

## Revendications

1. Procédé (100) de fourniture d'un point de préhension pour interaction mécanique sur un objet (1), comprenant les étapes suivantes :
- Fourniture (101) d'au moins une image de l'objet (1), l'image étant un résultat d'une acquisition par au moins un capteur (2),
- Fourniture (102) d'invites d'objets basées sur l'image fournie à l'aide d'un détecteur d'objet et/ou d'une méthode de segmentation non supervisée ou se-mi-supervisée,
- Réalisation (103) d'une segmentation sur les images fournies à l'aide des invites d'objet fournies pour générer un masque d'objet représentant l'objet (1),
- Réalisation (104) d'une squelettisation morphologique dans l'image fournie sur la base du masque d'objet généré pour obtenir une polyligne, la réalisation (104) de la squelette morphologique comprenant les étapes suivantes :
∘ Construction de la polyligne à partir du masque d'objet généré,
∘ Suppression des lignes d'intersection et/ou des anneaux et/ou cercles de polyligne de la polyligne,
∘ Identification des points d'extrémité et d'une longueur de l'objet (1) pour obtenir un emplacement proche d'un barycentre de l'objet (1) comme point de préhension pour interaction mécanique,
- Réduction (105) de la polyligne en un nombre de points défini,
- Sélection (106) d'au moins l'un des points pour fournir le point de préhension pour interaction mécanique sur l'objet (1).

2. Procédé (100) selon la revendication 1, **caractérisé en ce que** la fourniture (102) des invites d'objet comprend les étapes suivantes :
- Fourniture de cadres de délimitation de l'objet (1) comme propositions d'objets,
- Inférence de prédictions de cadres de délimitation au moyen du détecteur d'objet sur la base des cadres de délimitation,
- Fourniture des invites d'objet sur la base des prédictions de cadres de délimitation inférés.

3. Procédé (100) selon la revendication 1, **caractérisé en ce que** la fourniture (102) des invites d'objet comprend les étapes suivantes :
- Fourniture de patchs de segmentation en tant que propositions d'objet,
- Utilisation de la méthode de segmentation non supervisée sur la base des patchs de segmentation pour fournir les invites d'objet.

4. Procédé (100) selon l'une quelconque des revendications précédentes, **caractérisé en ce que** la réalisation (103) de la segmentation comprend les étapes suivantes :
- Codage de l'image au moyen d'une architecture de réseau neuronal transformateur de vision,
- Codage des invites d'objet en un espace latent,
- Requête de l'image codée avec les invites d'objet codées,
- Décodage d'un masque pour chaque objet (1) sur l'image.

5. Procédé (100) selon l'une quelconque des revendications précédentes, **caractérisé en ce que** la réduction (105) de la polyligne au nombre de points défini est effectuée en utilisant l'algorithme Ramer-Douglas-Peucker.

6. Procédé (100) selon l'une quelconque des revendications précédentes, **caractérisé en ce que** la réalisation de la segmentation (103) est une segmentation à tir nul.

7. Programme informatique (20) comprenant des instructions qui, lorsque le programme informatique (20) est exécuté par un ordinateur (10), amènent l'ordinateur (10) à mettre en œuvre un procédé (100) selon l'une quelconque des revendications précédentes.

8. Appareil de traitement de données (10), comprenant des moyens pour mettre en œuvre le procédé (100) selon l'une quelconque des revendications 1 à 6.

9. Support de stockage lisible par ordinateur (15) comprenant des instructions qui, lorsqu'elles sont exécutées par un ordinateur (10), amènent l'ordinateur (10) à mettre en œuvre les étapes du procédé (100) selon l'une quelconque des revendications 1 à 6.
